# EUROPEAN PATENT APPLICATION

(11) **EP 3 623 840 A1**
(43) Date of publication of application: **18.03.2020**
(21) Application number: 19195036.9
(22) Date of filing: 03.09.2019
(51) Int. Cl.: G01S 7/4863, G01S 7/4914, G01S 7/481, H01L 27/146, H04N 5/378, G01S 17/89

(54) **OPTICAL SENSOR, PARTICULARLY HYBRID ANALOG-DIGITAL OPTICAL SENSOR ARRAY**

(30) Priority: 13.09.2018 EP 18194162
(71) Applicant: IDT Inc., San Jose, CA 95138 (US)
(72) Inventor: ALLEN, Dan Gilbert, Springville, UT 84663 (US); REICHEL, Thomas, 01277 Dresden (DE); OLSEN, Ian, Truckee, CA 96161 (US); GÖPFERT, Lars, 01279 Dresden (DE); GARZAROLLI, Matthias, 01309 Dresden (DE); RICHTER, Raik, 01731 Kreischa (DE)
(74) Representative: Lippert Stachow Patentanwälte Rechtsanwälte Partnerschaft mbB

(57) **Abstract**

The invention relates to an optical sensor (1) for detecting and processing light signals, comprising:
an array (2) of photosensitive pixels (3) for detecting light signals,
a first signal output (4) for an analog front end signal processing unit (5) for processing the signals of one or more of the photosensitive pixels (3) of the array (2) of photosensitive pixels (3), and
a second signal output (6) for a readout circuit (7) for processing the signals of the array (2) of photosensitive pixels (3).

## Description

The invention relates to an optical sensor for detecting and processing light signals, particularly hybrid analog-digital optical sensor array.

Optical sensors are used to convert light signals to electrical signals for further processing. One type of optical sensor produces an analog electrical signal depending on the light intensity received by the optical sensor. Another type of optical sensor changes its resistance depending on the light intensity received by the optical sensor. Often a defined light signal is provided to the environment and the optical sensor measures the response of the environment to this defined light signal. The defined light signal can have for example a certain wavelength spectrum and/or intensity. The signals of the optical sensor can be further processed to determine certain variables or parameters of the environment.

Optical sensors are used in a wide range of applications, for example in light detection and ranging systems (Lidar-systems), spectroscopy, proximity monitoring or photoplethysmography (PPG). However, every application has different requirements regarding the optical sensor, like sensitivity, wavelength spectrum, dynamic range, ambient or DC level subtraction, noise cancellation and so on.

From the prior art it known to use sensor arrays, like CMOS image sensor arrays for applications requiring high sensitivity and/or scalability. Example for such applications are Lidar-systems, imaging or spectroscopy. On the other hand, it is known from the prior art to use single channel or multiplexed analog front end (AFE) based sensors for applications requiring low power, linearity, dynamic range, ambient or DC level subtraction, front-end current cancellation for enhanced range, wide gain ranging, noise-shaping and/or frequency demodulation. Example for such applications are proximity monitoring, photoplethysmography or measuring time of flight of a light pulse for distance ranging (Lidar system).

In modern electronic devices it is desired to limit the apertures for sensors in the device housing for aesthetic reasons. For example, in modern mobile devices like smartphones or tablets the aperture for optical sensors in the main display is designed as small as possible. On the other hand, the functionality of the optical sensors is important for the use of the mobile device.

It is therefore an object of the present invention to provide an optical sensor which can provide the advantages of sensor arrays and single channel or multiplexed analog front end based sensors and at the same time requires a minimum of space.

The object is solved by an optical sensor for detecting and processing light signals, comprising:
an array of photosensitive pixels for detecting light signals,
a first signal output for an analog front end signal processing unit for processing the signals of one or more of the photosensitive pixels of the array, and
a second signal output for a readout circuit for processing the signals of the array of photosensitive pixels.

The optical sensor according to the invention comprises an array of photosensitive pixels for detecting light signals. Each photosensitive pixel comprises a photosensitive region for converting the light signals into electrical signals, particularly analog electrical signals.

The optical sensor according to the invention further comprises a first signal output for an analog front end processing unit and a second output for a readout circuit. The readout circuit is connected or operably connectable to the second signal output and preferably comprises a sample capacitor, a shift register, a comparator, an analog-to-digital converter and/or an analog signal sampler. The analog front end signal processing unit is connected or operably connectable to the first signal output and preferably comprises a current sensing amplifier, a transimpedance amplifier, an integrator, a voltage amplifier, a mixer, an analog filter, a signal conditioner and/or an analog digital converter. Particularly, the analog front end signal processing unit is a switch-cap integrator, a dual slope analog-to-digital converter, a sigma-delta modulator or sigma-delta analog-to-digital converter, a successive approximation register analog-to-digital converter, a mixer or a current mirror. In general, the analog front end processing unit can be any type analog or analog-to-digital circuits conditioning the signal of the first signal output and/or measuring it. The analog front end processing unit can advantageously provide circuit functionality such as ambient light cancellation using a current mode track and hold circuit, and time-domain processing such as mixing or filtering at operation frequencies much higher than the timing signals of the pixels or the frame rate of the readout circuit for processing the signals of the array of photosensitive pixels.

The signals of the array of photosensitive pixels can be processed by the analog front end processing unit and the readout circuit. Thereby the optical sensor according to the invention can provide the advantages of sensor arrays and single channel or multiplexed analog front end based sensors, while only requiring the space of a sensor array.

According to a variant of the invention the first signal output provides a low impedance connection allowing an analog front end signal proportional to an instantaneous or present light signal within the pixel and/or the second signal output is via a capacitive load and delivers a signal proportional to an integrated or sampled light signal within the pixel.

Pursuant to a particularly preferred variant of the invention the readout circuit is addressable.

In a variant of the invention each pixel of the array of photosensitive pixels comprises a first switch for selectively connecting the pixel to the first signal output for the analog front end signal processing unit. Since an analog front end signal processing unit does not require signals of a sensor array but only of one or multiple sensors the pixels of the array of photosensitive pixels can be selectively connected to the first signal output by the first switches integrated into the pixels. This is particularly advantageous if the array of photosensitive pixels comprises different kinds of photosensitive pixels, like e.g. for different light spectrums, since only the signals of the relevant pixels for the analog front end signal processing unit can be connected to the first signal output. The first switches of the pixels can be addressed for example global, per column, per row or per pixel.

If the first switch of a pixel is closed the raw electrical signal of this pixel is forwarded to the first signal output. If several first switches of different pixels are closed the raw electrical signals of these pixels are accumulated at the first signal output, i.e. they are connected in parallel to the first signal output.

The optical sensor according to the invention can comprise further signals outputs for multiple analog front end signal processing units, especially if the raw electrical signals of different pixels are incompatible to each other, which might be due to different signal strengths, or if the signals should be processed in parallel.

The raw electrical signal of the pixels of the array of photosensitive pixels, which is provided to the first signal output, is unamplified and unbuffered.

According to a variant of the invention the array of photosensitive pixels is one-dimensional or two-dimensional, wherein the two-dimensional array of photosensitive pixels comprises rows and columns. The array of photosensitive pixels can also be scattered or irregular. A one-dimensional array of photosensitive pixels is for example a string of pixels and the two-dimensional array of photosensitive pixels is a rectangular array, preferably comprising rows and columns to address the single pixels.

Pursuant to a variant of the invention the optical sensor further comprises an electrical signal collector for each photosensitive pixel connected or operably connectable to the respective photosensitive pixel and the second signal output for the readout circuit. The electrical signal collector is used to collect the electrical signal of the photosensitive pixel. The electrical signal collector is for example a capacitor, a floating diffusion, a floating gate or an amplifier input terminal.

According to a further variant of the invention the optical sensor further comprises a timing signal node for the electrical signal collector, wherein the electrical signal collector receives the electrical signals from the photosensitive pixel during integration times set by the timing signal node. Preferably a timing signal generator is connected to the timing nodes of the pixels of the array of photosensitive pixels, wherein the timing signal generator defines signal integration times and/or provides a pixel reset.

For example, a row selector activates rows in sequence for readout by the readout circuit. A row select switch (transistor) is located in each pixel. When the selector operates the row select switch to connect the integrated signal to the readout circuit the signals on all pixels on the row can be transferred to a storage capacitor or column-parallel analog-to-digital converter. This signal is not a raw electrical signal, but an amplified, integrated and/or buffered signal. In case of a photodiode the raw signal is charge and the output integrated signal is voltage integrated on a capacitor. This is different from the analog front end signal processing unit, which receives raw electrical signals directly. This is also different from a CCD, which does not connect pixels directly to a common node, but via a chain of electrically isolated wells.

Pursuant to a variant of the invention the pixels have a configurable integration time. This may be done by providing a plurality of reset signals and an in-pixel memory. The in-pixel memory selects which timing signal will be used to define the integration time. This is advantageous for collecting signals over widely differently spectral ranges with large variations in intensity such as the UV and visible ranges in sunlight. Sunlight has much more visible light than UV, so UV pixels can be integrated longer.

The timing may also be configured by a timer within the pixel set to respond at intervals to the timing signal, rather than to every timing signal. For instance, a timing signal may include two start pulses and stop pulse. Pixels may be configured to respond to the first (longer integration time) pulse, or the second pulse, e.g. according to the in-pixel logic and the state of the integration time memory in the pixel.

According to a variant of the invention, referred to as interleave mode, a small period of time between frames can be used for proximity detection. Pixels can either all be connected to the analog front end processing unit temporarily, or selected (typically IR-sensitive) pixels are connected. A short light pulse illuminates a target and return light is measured by the analog front end processing unit, which is optimized for ambient light rejection, for example via light source modulation such as pulsing and demodulation in a receiver of sufficient bandwidth - essentially keeping the AC signal and removing the DC signal. In case that some pixels are not connected to the analog front end processing unit, those pixels can be held in reset during the proximity sensing pulse so that the ambient light level sensed by those pixels is not perturbed by the proximity pulse..

In a particularly preferred variant of the invention the optical sensor further comprises an active circuit element connected to the electrical signal collector providing signal gain and/or buffering of the signal at the electrical signal collector. Particularly, the active circuit element is connected parallel to the electrical signal collector. The active element is used to change the properties, like e.g. amplitude, of the electrical signal of the pixel of the array of photosensitive pixels. For example, the active circuit element is a capacitive transimpedance amplifier. The transimpedance amplifier is for example an operational amplifier with a capacitor in the feedback path. In this example, the output of the operational amplifier ramps as charge collects on the capacitor. This prevents the respective photodiode well from filling up, which improves linearity. In addition, the feedback capacitor may be of a metal-insulator (MIM) type, with linearity better than typical floating diffusion nodes or NMOS capacitors. The circuit may be reset by shorting the feedback capacitor or separately shorting the input and output of the capacitive transimpedance amplifier to desired voltages. This is advantageous for obtaining a wider output voltage range of the capacitive transimpedance amplifier.

The active element can also be a source follower, as is common in 3 transistor pixel designs known from the prior art (see for example chapter 4.3 in "CMOS/CCD Sensors and Camera Systems", second edition, By Gerald C. Hoist and Terrence S. Lohmheim, SPIE Press Bellingham Washington, 2011 (ISBN 9780819486530)).

Pursuant to an advantageous variant of the invention each pixel of the array of photosensitive pixels comprises a second switch for selectively connecting the pixel to the second output for the readout circuit. Using the first and second switches the electrical signals of a pixel of the array of photosensitive pixels can be selectively connected to the first signal output and/or the second signal output. Thus, the pixels of the array of photosensitive pixels can be split to the first signal output and the second signal output. It is also possible that the electrical signals of one or more pixels of the array of photosensitive pixels are forwarded to the first signal output and the second signal output. Using the first switches and second switches the optical sensor can be easily adapted to many different uses.

According to a variant of the invention the first switch and/or the second switch is an electronic switch with a high impedance state and a low impedance state. An electronic switch is easy to implement only requires a minimum of space, thereby reducing the space requirement of the optical sensor.

In an advantageous variant of the invention the optical sensor comprises a control unit for the first switches and/or second switches. The control unit can comprise a memory for storing control sequences and/or intermediate results. The control unit is used to connect the pixels of the array of photosensitive pixels to the first signal output and/or second signal output in a defined manner, particularly in a defined sequence.

Pursuant to a variant of the invention each pixel of the array of photosensitive pixels comprises a reset circuit for resetting the pixel. The pixel is preferably reset after each measurement to avoid any interferences between subsequent measurements.

According to a further preferred variant of the invention the pixel of the array of photosensitive pixels further comprises a third switch to shut down the active circuit element, particularly if the pixel of the array of photosensitive pixels is connected to the first signal output. This avoids any interferences caused by the active element of the pixel if the pixel is only connected to the first signal output. The active element is only relevant for the second signal output and if the signal of the pixel is only provided to the first signal output the active element can be shut down by the third switch to avoid any interferences. The third switch can be for example controlled by the control unit.

In a variant of the invention the active circuit element comprises a selectable gain. For example, the selectable gain is an array of selectable integrating capacitors. A gain select memory, which is preferably addressable by row and column, can be used to configure the selectable gain.

Pursuant to a variant of the invention each photosensitive pixel comprises a photodiode or a photoconductor. A photodiode is for example a pinned photodiode with pinning voltage or an avalanche diode, particularly signal photon avalanche photodiode (SPAD) and a photoconductor is for example a bolometer, an IR photoconductor or a black silicon. The photosensitive pixel can also comprise a thermopile or pyroelectric device.

According to a particularly preferred variant of the invention the active circuit element is a capacitive transimpedance amplifier, wherein the bias voltage of the capacitive transimpedance amplifier is preferably greater than the pinning voltage of the respective pinned photodiode of the respective photosensitive pixel. This allows the photodiode to operate with much lower capacitance.

Pursuant a further variant of the invention the analog front end signal processing unit comprises a bias voltage, wherein the bias voltage is preferably greater than the pinning voltage of the pinned photodiode of the photosensitive pixels.

In an advantageous variant of the invention the optical sensor further comprises an electrical signal source connected to or operably connectable to the first signal output for providing an electrical signal to the pixels of the array of photosensitive pixels. The electrical signal source can generate an electrical signal corresponding to the signal of the pixel of the array of photosensitive pixels. The generated electrical signal can be injected into selected pixels of the array of photosensitive pixels, particularly through the first switch. The injected signal can be used for calibration of the pixel or for testing the operation of the pixel of the array of photosensitive pixels without an external light source. The electrical signal source is preferably a current source for metering a fixed, and preferably programmable amount of current. Such a current source connected to or operable connectable to the first signal output can be further used for front end current cancellation or ambient light (DC) signal cancellation for measuring small AC signals as PPG waveforms or light pulses reflected from a target for proximity sensing.

According to a preferred variant of the invention the optical sensor further comprises one or more optical filters disposed over the pixels of the array of photosensitive pixels, wherein the optical filters preferably comprise a spectral array for obtaining a light spectrum. The one or more optical filters are used to define the relevant wavelength spectrum of the optical sensor. The wavelength spectrum can be e.g. RGB or any other spectrum.

Pursuant to an advantageous variant of the invention the array of photosensitive pixels is a two-dimensional array of rows and columns, wherein each pixel of the array of photosensitive pixels comprises a row selector switch and wherein the readout circuit comprises signal processing nodes for each column. The readout circuit comprises a signal processing node for each column. The rows in each column are selected by the row selector switch of the pixels of the array of photosensitive pixels. Advantageously the rows of the columns are selected simultaneously by the row selector switches, i.e. for each column the same row is selected by the row selector switches at a time. Only one row is selected a time, so that the rows are selected serially, whereas the different columns are processed in parallel.

In a variant of the invention the optical sensor further comprises a clock signal generator, wherein the clock signal is used to synchronize the signal processing nodes and/or the row selector switches.

Preferably each signal processing node comprises an analog-to-digital converter and a memory. The analog-to-digital converter processes the signal received from the selected pixel of the array of photosensitive pixels and the memory is used to store the processed signal. The pixel is selected by the row selector switches for a certain signal processing node associated to a certain row. The signal processing node store the results for all rows and afterwards forwards the results for further processing.

The analog-to-digital converter comprises a voltage ramp generator and a comparator for comparing the ramp voltage with the signal of the second signal output, preferably at clock intervals.

In the following the invention will be further explained with respect to the embodiments shows in the figures. It shows:
- Fig. 1: a block diagram of an exemplary embodiment of an optical sensor according to the invention, and
- Fig. 2: a block diagram of a pixel of an array of photosensitive pixels and a readout circuit node of an optical sensor according to the invention.

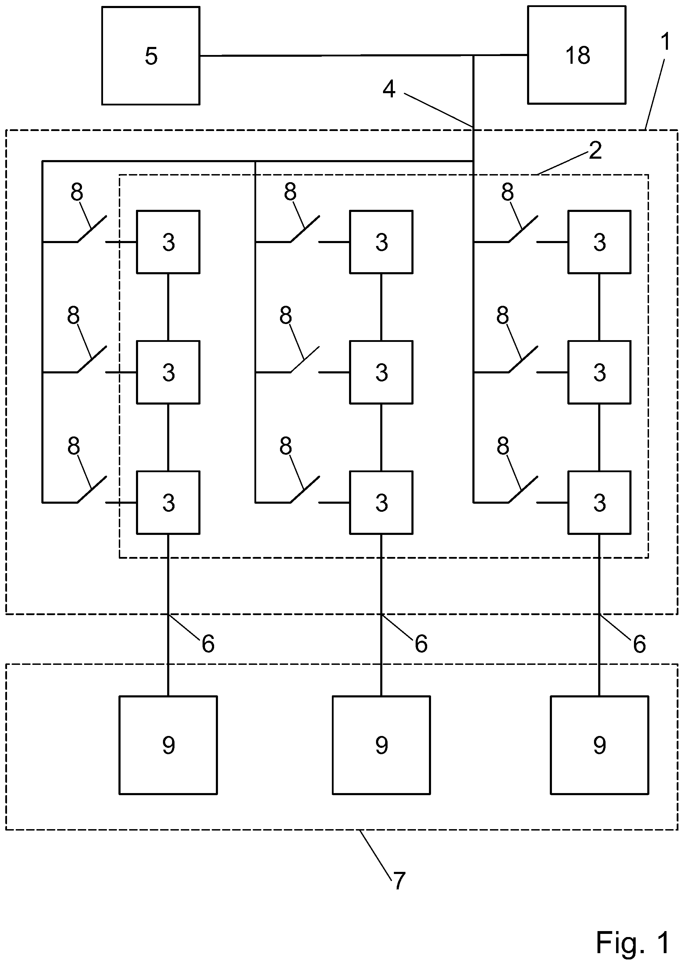

Fig. 1 shows a block diagram of an exemplary embodiment of an optical sensor 1 according to the invention. The optical sensor 1 is identified in Fig. 1 by a dashed rectangular. The optical sensor 1 comprises an array 2 of photosensitive pixels 3 for detecting light signals. The array 2 is again identified by a dashed rectangular.

The optical sensor 1 further comprises a first signal output 4 for an analog front end signal processing unit 5 for processing the signals of one or more of the photosensitive pixels 3 of the array 2 and a second signal output 6 for a readout circuit 7 for processing the signals of the array 2 of photosensitive pixels 3. The analog front end signal processing unit 5 is connected or operably connectable to the first signal output 4 and preferably comprises a current sensing amplifier, a transimpedance amplifier, an integrator, a voltage amplifier, a mixer, an analog filter, a signal conditioner and/or an analog digital converter. The readout circuit 7 is connected or operably connectable to the second signal output 6 and preferably comprises a sample capacitor, a shift register, a comparator, an analog-to-digital converter and/or an analog signal sampler.

The array 2 of photosensitive pixels 3 is two-dimensional array 2 of rows and columns. Each pixel 3 of the array 2 of photosensitive pixels 3 comprises a first switch 8 for selectively connecting the pixel 3 to the first signal output 4 for the analog front end signal processing unit 5.

The readout circuit 7 connected to the second output 6 of the optical sensor 1 comprises for each column of the array 2 of photosensitive pixels 3 a separate signal processing node 9.

The signals of array 2 of photosensitive pixels can be forwarded to the first signal output 4 and/or the second signal output 6. Thus, the optical sensor 1 according to the invention combines the advantages of an array 2 of photosensitive pixels 3 with the advantages of an analog front end signal processing unit 5.

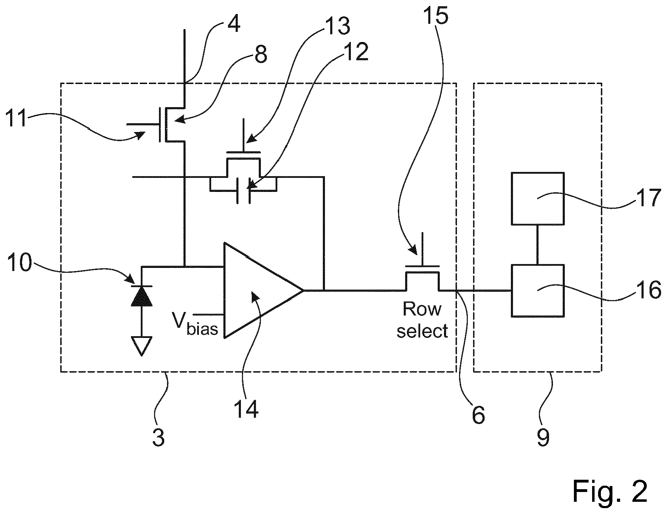

The first signal output 4 of the optical sensor 1 shown in Fig. 1 provides a low impedance connection allowing an analog front end signal proportional to an instantaneous or present light signal within the pixel 3 and the second signal output 6 is connected to a capacitive element 12 (as shown e.g. in Fig. 2) and delivers a signal proportional to an integrated or sampled light signal within the pixel 3.

The optical sensor 1 can further comprise an electrical signal source (18) connected or operably connectable to the first signal output 4 for providing an electrical signal to the pixels 3 of the array 2 of photosensitive pixels 3 or to the analog front end signal processing unit 5. The electrical signal can be used to calibrate the pixel or to test the analog front end signal processing unit 5.

Fig. 2 shows a block diagram of a pixel 3 of an array 2 of photosensitive pixels 3 and a readout circuit node 9 of an optical sensor 1 according to the invention.

The photosensitive pixel 3 comprises a photosensitive region 10 for converting the light signals into electrical signals, particularly into analog electrical signals. For example, the photosensitive pixel 3 comprise a photodiode or a photoconductor.

The electrical signals of the photosensitive region 10 are selectively forwarded to the first signal output 4 by first switch 8. First switch 8 is an electronic switch, with a first switch select node 11. Thus, the first switch is activated and deactivated by first switch node 11.

Alternatively or additionally, the signals of the photosensitive region 10 are selectively forwarded to the second signal output 6. In this signal path the optical sensor 1, particularly each pixel 3, comprises an electrical signal collector 12. According to the embodiment shown in Fig. 2 the electrical signal collector 12 is a capacitor.

Each electrical signal collector 12 comprises a timing signal node 13, wherein the electrical signal collector 12 receives the electrical signals from the photosensitive region 10 during integration times set by the timing signal node 13. Preferably, a timing signal generator (not shown) is connected to the timing nodes 13 of the pixels 3 of the array 2 of photosensitive pixels 3, wherein the timing signal generator defines signal integration times and/or provides a pixel reset.

The signal path between the photosensitive region 10 and the second signal output 6 further comprises an active circuit element 14, which is connected to the electrical signal collector 12 providing signal gain and/or buffering of the signal of the electrical signal collector 12. Particularly, the active circuit element 14 is connected parallel to the electrical signal collector 12, as shown in Fig. 2.

The active circuit element 14 shown in Fig. 2 is an operational amplifier and together with the capacitor of the electrical signal collector 12 the active circuit element 14 builds a capacitive transimpedance amplifier. Preferably, the bias voltage Vbias of the capacitive transimpedance amplifier is greater than the pinning voltage of a pinned photodiode acting as the photosensitive region 10 of the pixel 3. If the analog front end processing unit 5 also uses a bias voltage Vbias, this bias voltage is preferably also greater than the pinning voltage of a pinned photodiode acting as the photosensitive region 10 of the pixel 3.

Each photosensitive pixel 3 of the array 2 of photosensitive pixels 3 further comprises a second switch15 for selectively connecting the pixel 3 to the second signal output 6 for the readout circuit 7. The second switch 15 can also be referred to as row selector because it is used for selecting the pixels 3 in the rows of the array 2 of photosensitive pixels 3. Preferably, the second switch 15 is again an electronic switch.

The optical sensor 1 further comprises a control unit (not shown) for controlling the first switches 8 and/or second switches 15. The control unit advantageously comprises a memory for storing switching sequences defining integration times and or pixel 3 resets.

One or more optical filters (not shown) can be disposed over the pixels 3 of the array 2 of photosensitive pixels 3, wherein the optical filters preferably comprise a spectral array for obtaining a light spectrum.

The readout circuit 7 comprises a separate signal processing node 9 for each column of the array 2 of photosensitive pixels 3. The signal processing node 9 comprises for example an analog-to-digital converter 16 and a memory 17 for storing intermediate results. The analog-to-digital converter 16 comprises e.g. a voltage ramp generator and a comparator for comparing the ramp voltage with the signal of the second signal output 6, preferably at clock intervals.

The optical sensor 1 can further comprise a clock signal generator (not shown), wherein the clock signal of the clock signal generator is used to synchronize the different components of the optical sensor 1, particularly the signal processing nodes 9 and the first and/or second switches 8, 15.

### List of reference numerals

- 1: optical sensor
- 2: array of photosensitive pixels
- 3: photosensitive pixel
- 4: first signal output
- 5: analog front end signal processing unit
- 6: second signal output
- 7: readout circuit
- 8: first switch
- 9: signal processing node
- 10: photosensitive region
- 11: first switch select node
- 12: electrical signal collector
- 13: timing signal node
- 14: active circuit element
- 15: second switch
- 16: analog-to-digital converter
- 17: memory
- 18: electrical signal source

## Claims

1. Optical sensor (1) for detecting and processing light signals, comprising:
an array (2) of photosensitive pixels (3) for detecting light signals,
a first signal output (4) for an analog front end signal processing unit (5) for processing the signals of one or more of the photosensitive pixels (3) of the array (2) of photosensitive pixels (3), and
a second signal output (6) for a readout circuit (7) for processing the signals of the array (2) of photosensitive pixels (3).

2. Optical sensor (1) according to claim 1,
wherein the first signal output provides a low impedance connection allowing an analog front end signal proportional to an instantaneous or present light signal within the pixel and/or the second signal output is via a capacitive load and delivers a signal proportional to an integrated or sampled light signal within the pixel.

3. Optical sensor (1) according to claim 1 or claim 2,
wherein each pixel (3) of the array (2) of photosensitive pixels (3) comprises a first switch (8) for selectively connecting the pixel (3) to the first signal output (4) for the analog front end signal processing unit (5).

4. Optical sensor (1) according to claim 3,
further comprising an electrical signal collector (12) for each photosensitive pixel (3) connected or operably connectable to the respective photosensitive pixel (3) and the second signal output (6) for the readout circuit (7), wherein the electrical signal collector (12) is preferably a capacitor, a floating diffusion, a floating gate or an amplifier input terminal.

5. Optical sensor (1) according to claim 4,
further comprising a timing signal node (13) for the electrical signal collector (12), wherein the electrical signal collector (12) receives the electrical signals from the photosensitive pixel (3) during integration times set by the timing signal node (13).

6. Optical sensor (1) according to claim 5,
wherein a timing signal generator is connected to the timing nodes (13) of the pixels (3) of the array (2) of photosensitive pixels (3), wherein the timing signal generator defines signal integration times and/or provides a pixel (3) reset.

7. Optical sensor (1) according to any of claims 1 to 6,
further comprising an active circuit element (14) connected to the electrical signal collector (12) providing signal gain and/or buffering of the signal at the electrical signal collector (12).

8. Optical sensor (1) according to any of claims 1 to 7,
wherein each pixel (3) of the array (2) of photosensitive pixels (3) comprises a second switch (15) for selectively connecting the pixel (3) to the second signal output (6) for the readout circuit (7).

9. Optical sensor (1) according to any of claims 1 to 8,
wherein the readout circuit (7) is connected or operably connectable to the second signal output (6) and preferably comprises a sample capacitor, a shift register, a comparator, an analog-to-digital converter (16) and/or an analog signal sampler.

10. Optical sensor (1) according to any of claims 1 to 9,
wherein the analog front end signal processing unit (5) is connected or operably connectable to the first signal output (4) and preferably comprises a current sensing amplifier, a transimpedance amplifier, an integrator, a voltage amplifier, a mixer, an analog filter, a signal conditioner and/or an analog digital converter (16).

11. Optical sensor (1) according to claim 7,
wherein the pixel (3) of the array (2) of photosensitive pixels (3) further comprises a third switch (13) to shut down the active circuit element (14), particularly if the pixel (3) of the array (2) of photosensitive pixels (3) is connected to the first signal output (4).

12. Optical sensor (1) according to claim 7 or claim 11,
wherein the active circuit element (14) is a capacitive transimpedance amplifier, wherein the bias voltage of the capacitive transimpedance amplifier is preferably greater than the pinning voltage of the respective pinned photodiode of the respective photosensitive pixel (3).

13. Optical sensor (1) according to any of claims 1 to 12,
further comprising an electrical signal source connected to or operably connectable to the first signal output (4) for providing an electrical signal to the pixels (3) of the array (2) of photosensitive pixels (3) or the analog front end signal processing unit (5).

14. Optical sensor (1) according to any of claims 1 to 13,
further comprising one or more optical filters disposed over the pixels (3) of the array (2) of photosensitive pixels (3), wherein the optical filters preferably comprise a spectral array for obtaining a light spectrum.

15. Optical sensor (1) according to any of claims 1 to 14,
wherein the array (2) of photosensitive pixels (3) is a two-dimensional array of rows and columns and wherein each pixel (3) of the array (2) of photosensitive pixels (3) comprises a row selector switch (15) and wherein the readout circuit (7) comprises signal processing nodes (9) for each column, wherein each signal processing node (9) preferably comprises an analog-to-digital converter (16) and a memory (17).

16. Optical sensor (1) according to claim 15,
further comprising a clock signal generator, wherein the clock signal is used to synchronize the signal processing nodes (9) and/or the row selector switches (15).
